(19) 

Europäisches Patentamt
European Patent Office
Office européen des brevets

(11) **EP 3 185 440 B1**

(12) **EUROPEAN PATENT SPECIFICATION**

(45) Date of publication and mention of the grant of the patent:
**10.07.2019 Bulletin 2019/28**

(21) Application number: **14881947.7**

(22) Date of filing: **31.12.2014**

(51) Int Cl.:
*H04B 7/10* *(2017.01)*  *H01Q 25/00* *(2006.01)*
*H04B 7/04* *(2017.01)*  *H04B 7/08* *(2006.01)*

(86) International application number:
**PCT/CN2014/096031**

(87) International publication number:
**WO 2015/117532 (13.08.2015 Gazette 2015/32)**

(54) **DOA-BF WEIGHT ESTIMATION METHOD AND DEVICE FOR DUAL-POLARIZATION ANTENNA SYSTEM**

DOA-BF-GEWICHTSSCHÄTZUNGSVERFAHREN UND VORRICHTUNG FÜR ANTENNENSYSTEM MIT DUALER POLARISIERUNG

PROCÉDÉ ET DISPOSITIF D'ESTIMATION DE POIDS DOA-BF POUR SYSTÈME D'ANTENNE À DOUBLE POLARISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2014 CN 201410416345**

(43) Date of publication of application:
**28.06.2017 Bulletin 2017/26**

(73) Proprietor: **ZTE Corporation**
**Shenzhen, Guangdong 518057 (CN)**

(72) Inventors:
 • **ZHANG, Ting**
 **Shenzhen**
 **Guangdong 518057 (CN)**
 • **LI, Bin**
 **Shenzhen**
 **Guangdong 518057 (CN)**
 • **ZHOU, Yunqing**
 **Shenzhen**
 **Guangdong 518057 (CN)**

(74) Representative: **Savi, Massimiliano et al**
**NOTARBARTOLO & GERVASI S.p.A.**
**Corso di Porta Vittoria 9**
**20122 Milano (IT)**

(56) References cited:
 **EP-A1- 2 351 246**   **CN-A- 101 465 680**
 **CN-A- 101 686 074**   **CN-A- 102 075 226**
 **CN-A- 102 170 303**

 • **QIUBIN GAO ET AL: "Utilization of channel reciprocity in advanced MIMO system", COMMUNICATIONS AND NETWORKING IN CHINA (CHINACOM), 2010 5TH INTERNATIONAL ICST CONFERENCE ON, IEEE, PISCATAWAY, NJ, USA, 25 August 2010 (2010-08-25), pages 1-5, XP031847202, ISBN: 973-963-9799-97-4**
 • **LILEI WANG ET AL: "Power offset compensation schemes between CRS and DRS for downlink dual layer beamforming in LTE system", COMMUNICATIONS AND NETWORKING IN CHINA (CHINACOM), 2010 5TH INTERNATIONAL ICST CONFERENCE ON, IEEE, PISCATAWAY, NJ, USA, 25 August 2010 (2010-08-25), pages 1-4, XP031847213, ISBN: 973-963-9799-97-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to the wireless network technology for performing Beamforming BF transmission by using Direction of Arrival DOA estimation, and in particular to a DOA Beamforming DOA-BF weight estimation method and device for a dual-polarized antenna system.

Background

Beamforming, BF is an implementation way of adaptive array smart antenna, and is a kind of digital signal processing technology implemented on an antenna array composed by multiple array elements. The Beamforming uses the differences of useful signals and interference signals on the space channel characteristic, such as DOA and so on, and configures appropriate weighted values for the antenna array to isolate useful signals and interference signals in the space. Therefore, the Beamforming achieves the aim of reducing the interference between users and improving the system capacity. The BF technology has been widely applied in the wireless networks such as Time Division Long Term Evolution TD-LTE, Worldwide Interoperability for Microwave Access WiMAX, Time Division-Synchronous Code Division Multiple Access TD-SCDMA and so on.

There are two main implementation ways: Multiple-Input Multiple-Output Beamforming MIMO Beamforming (MIMO BF for short) and DOA Beamforming DOA-BF.

The MIMO Beamforming technology is a beamforming method in which the channel information is used to weight transmitting data to form a beam. The MIMO Beamforming technology may also be divided into two modes, open loop and closed loop.

Open loop Beamforming technology weights the transmitting signals by uplink channel information. The Open loop Beamforming technology does not need the receiving end to feedback channel information to the transmitting end, the transmitting end estimates by itself to obtain the channel information through the uplink channel. Open loop Beamforming technology has an obvious effect on the improving of coverage and throughput. However, as the Open loop Beamforming technology needs to estimate a downlink transmitting weight by the uplink signals, and the processing time delay is long, the Open loop Beamforming technology is suitable for a low speed scenario. In addition, the open loop Beamforming technology uses the reciprocal characteristics of uplink channel and downlink channel, so when the system implements the open loop Beamforming technology, each transceiver path needs to be calibrated.

Closed-loop Beamforming technology needs the terminal to feedback channel information, such as Codebook, to the transmitting end, and uses the feedback information to weight the transmitting signals. As the influence of feedback time delay, the closed-loop Beamforming technology also only has a better performance in a low speed scenario. In addition, due to the influence of the accuracy of feedback, the overall performance of the closed loop Beamforming technology is slightly worse than that of the open loop, but the implement of the system is relatively simple, the antenna transceiver paths do not need to be calibrated.

According to the situation of the industry, at present, the Time Division Duplexing TDD system adopts the open-loop Beamforming technology, and the closed loop Beamforming technology is applied in Frequency Division Duplexing FDD system.

DOA Beamforming (DOA BF for short) technology is a beamforming method in which Direction of Arrival DOA of the signals is estimated, and transmitting weight value is generated by DOA information, such that the transmitting beam main lobe aims at the optimal path direction.

The DOA BF technology requires that the space between the antenna arrays is small (usually less than a carrier wave length), and the diversity effect is relatively poor on the occasion of rich multi-path; and on the occasion of Non Line of Sight NLOS, the performance will be also declined due to the inaccuracy of DOA estimation. Therefore, the using effect of the DOA BF technology is not good for the dense urban area, but it is relatively effective on the occasion that Line of Sight is dominant such as in rural, suburban, aviation channel and etc. The DOA BF technology requires high consistency for antenna array elements. Therefore, the implementation for system not only needs to calibrate the transceiver paths, but also needs to calibrate the antenna, and the system performance will decline when the calibration is not good.

Dual-polarized smart antenna is composed of two groups of antennas. Unlike conventional linear array, all antenna oscillators of a group of antenna unit are rotated + 45 degrees relative to common vertical polarized antenna unit, and the other group of antenna unit is rotated -45 degree, and the two groups of antenna units are orthogonal polarized antennas. After dual-polarized antenna array is adopted, the size of the antenna is greatly reduced; the reliability of antenna is improved; and the interference is effectively reduced. Due to the good independence of polarization diversity, the polarized antenna technology has been widely focused.

In the related technology, when the dual-polarized antenna system is performed the DOA estimation, the DOA information of different polarization directions is consistent. But when the DOA information is applied to BF weight value calculation, due to phase differences between antennas with different polarization directions, the same phase combination cannot be performed for the antennas with different polarized directions, resulting in a decline in performance of the system.

The document EP2351246A1 discloses a method for transmission of reference signals and determination of precoding matrices for multi-antenna transmission.

Summary

The invention is defined by the independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

A DOA-BF weight estimation method according to claim 1 and device according to claim 2 for a dual-polarized antenna system to solve the current situation that when the current DOA information is applied to BF weight value estimation, the same phase combination cannot be performed.

Also provided is a DOA-BF weight estimation method for a dual-polarized antenna system, including:

acquiring an uplink channel estimation value and an uplink steering vector;
acquiring DOA information according to the uplink channel estimation value and the uplink steering vector;
generating a downlink transmitting weight value by the DOA information.

Alternatively, the uplink steering vector is:

$$a(\theta_i) = \begin{bmatrix} 1, & e^{j2\pi\frac{d}{\lambda_{UL}}\sin\theta_i}, & \cdots, & e^{j(M-1)2\pi\frac{d}{\lambda_{UL}}\sin\theta_i} \end{bmatrix}^T \quad (i = 1, 2, \cdots, N)$$

wherein, M is a number of receiving array elements of a base station; for the dual-polarized antenna system, M equals to 1/2 of a number of dual-polarized smart antennas; $\lambda_{UL}$ is an uplink wavelength; d is an actual array element space; $\theta_i$ is an incidence angle, and $\theta_i \in [-90°, 90°]$; N is a number of values within a value range of $\theta_i$; j is an imaginary unit; and e is a base of natural logarithms.

Alternatively, the DOA information is an angle of DOA.

Alternatively, the angle of DOA is obtained by the following expression:

$$f(\theta) = \underset{\theta \in \theta_i}{\arg}\left(\max\left(diag\left(a(\theta_i)^H \times R_{xx} \times a(\theta_i)\right)\right)\right);$$

wherein, $R_{xx} = HH^H$; H is an uplink channel estimation matrix, and $H^H$ is a conjugate transpose matrix for H; $a(\theta_i)^H$ is a conjugate transpose matrix for $a(\theta_i)$; and in the $f(\theta)$, the maximum $\theta$ is used as an estimated DOA angle $\theta_{real}$, $\theta_{real} \in [-90°, 90°]$.

Alternatively, the downlink transmitting weight value is:

$$w = \begin{bmatrix} w(\theta_{real}) & e^{j\phi}w(\theta_{real}) \end{bmatrix}$$

wherein,

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

$\lambda_{DL}$ is a downlink wavelength; $d$ is an actual array element space;
$e^{j\phi}$ represents a difference introduced by initial phases of the antennas in different polarization directions, $e^{j\phi} = \cos\Phi + j\sin\Phi$.

Also provided is a DOA-BF weight estimation device for a dual-polarized antenna system, including an acquiring module, a calculating module and a generating module.

The acquiring module is arranged to acquire an uplink channel estimation value and an uplink steering vector.

The calculating module is arranged to acquire DOA information according to the uplink channel estimation value and the uplink steering vector.

The generating module is arranged to generate a downlink transmitting weight value by the DOA information.

Alternatively, the uplink steering vector is obtained by calculating. The calculating formula of the uplink steering vector is:

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i=1,2,\cdots,N)$$

wherein, M is a number of receiving array elements of a base station; for the dual-polarized antenna system, M equals to 1/2 of a number of dual-polarized smart antennas; $\lambda_{UL}$ is an uplink wavelength; $d$ is an actual array element space; $\theta_i$ is an incidence angle, and $\theta_i \in [-90°,90°]$; N is a number of values within a value range of $\theta_i$; j is an imaginary unit; and e is a base of natural logarithms.

Alternatively, the DOA information is an angle of DOA.

Alternatively, the information of the incidence angle is obtained by the following expression:

$$f(\theta) = \arg_{\theta \in \theta_i}\left( \max\left( diag\left( a(\theta_i)^H \times R_{xx} \times a(\theta_i) \right) \right) \right);$$

wherein, $R_{xx} = HH^H$; H is an uplink channel estimation matrix, and $H^H$ is a conjugate transpose matrix for H; $a(\theta_i)^H$ is a conjugate transpose matrix for $a(\theta_i)$; and in the $f(\theta)$, the maximum $\theta$ is used as an estimated DOA angle $\theta_{real}$, $\theta_{real} \in [-90°,90]$.

Alternatively, the downlink transmitting weight value is:

$$w = \left[ w(\theta_{real}) \quad e^{j\phi}w(\theta_{real}) \right]$$

wherein,

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

$\lambda_{DL}$ is a downlink wavelength; $d$ is an actual array element space;
$e^{j\phi}$ represents a difference introduced initial phases of the antennas in different polarization directions, $e^{j\phi} = \cos\Phi + j\sin\Phi$.

Also provided is a computer program implementing the method.

Also provided is a computer readable storage medium storing the computer program.
The embodiments of the present invention provide a DOA-BF weight estimation method for a dual-polarized antenna system. The DOA-BF weight estimation method for a dual-polarized antenna system includes that: it is to acquire an uplink channel estimation value and an uplink steering vector; and acquire DOA information according to the uplink channel estimation value and the uplink steering vector; and generate a downlink transmitting weight value by the DOA information. The DOA-BF weight estimation method for a dual-polarized antenna system solves the current situation that when the DOA information in the related art is applied to DOA-BF weight value estimation, the same phase combination cannot be performed, and enhances the performance of the system efficiently.

Brief Description of Drawings

FIG. 1 is a flow chart of a DOA-BF weight estimation method for a dual-polarized antenna system in an embodiment of the present invention.

FIG. 2 is a block diagram of functional modules of DOA-BF weight estimation for a dual-polarized antenna system in an embodiment of the present invention.

Detailed Description

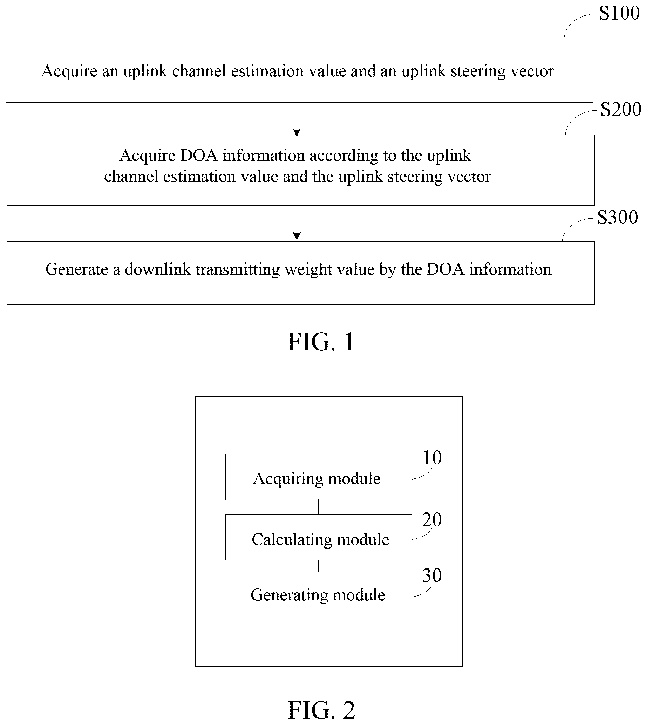

It should be understood that, the specific embodiments described here are only used to explain the present invention, but not to limit the present invention.
The embodiment of the present invention provides a DOA-BF weight estimation method for a dual-polarized antenna system. As shown in Fig. 1, in the embodiment one, the DOA-BF weight estimation method for a dual-polarized antenna system includes steps S100-S300.
In step S100, it is to acquire an uplink channel estimation value and an uplink steering vector.
The DOA-BF weight estimation device acquires the uplink channel estimation value according to the number of dual-polarized smart antennas, and the number of dual-polarized smart antennas corresponds to the dimension value of the uplink channel estimation value. If the number of the dual-polarized smart antennas at the base station end is eight, then the uplink channel estimation matrix H is 8*1 dimensions.
The uplink steering vector is obtained by calculating. The calculation of the uplink steering vector is as shown in the formula (1):

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i = 1, 2, \cdots, N) \quad (1)$$

Herein, M is a number of receiving array elements of a base station. For the dual-polarized antenna system, M equals to 1/2 of the number of dual-polarized smart antennas. The steering vectors of two groups of antennas in polarization directions are consistent. $\lambda_{UL}$ is an uplink wavelength. $d$ is an actual array element space. $\theta_i$ is an incidence angle, and $\theta_i \in$ [-90°, 90°], $N$ is the number of values within a value range of $\theta_i$; j is an imaginary unit; and e is a base of natural logarithms.
Assumed that the number of the dual-polarized smart antennas at the base station end is eight, then in the formula (1), M=4. $\lambda_{UL}$ is an uplink wavelength and is determined by the frequency of the carrier and the speed of the carrier transmission. $d$ is an actual array element space, and is designed by the factory in good condition when delivery from factory. $\theta_i$ is a range of an incidence angle, and $\theta_i \in$ [-90°, 90°], $N$ is a number of values corresponding to the value range of $\theta_i$. When the interval degree takes 1 degree, N=181.
In step S200, it is to acquire the Direction of Arrival DOA information according to the uplink channel estimation value and the uplink steering vector.
The DOA-BF weight estimation device acquires the DOA information according to the uplink channel estimation value and the uplink steering vector. The DOA information is an angle of DOA. According to maximum signal-to-noise ratio principle, the angle of DOA is obtained by the following formula (2):

$$f(\theta) = \arg_{\theta \in \theta_i} \left( \max \left( diag \left( a(\theta_i)^H \times R_{xx} \times a(\theta_i) \right) \right) \right) \quad (2)$$

Herein, in the formula (2), $R_{xx} = HH^H$; H is an uplink channel estimation matrix, and $H^H$ is a conjugate transpose matrix for H; $a(\theta_i)^H$ is a conjugate transpose matrix for $a(\theta_i)$; and in the $f(\theta)$, the maximum $\theta$ is used as an estimated DOA angle $\theta_{real}$.

For dual-polarized antennas, the calculation for $R_{xx}$ may be calculated separately according to two groups of the polarization directions, and also may be calculated by only taking one of two groups of the polarization directions. When $R_{xx}$ is calculated according to one group of polarization direction, the uplink channel estimation matrix H of the antennas in +45 degree of polarization direction is M*1 dimensions, and the uplink channel estimation matrix H of the antennas in -45 degree of polarization direction is M*1 dimensions, therefore $R_{xx}^{+45}$ is calculated according to the formula $R_{XX}^{+45} = HH^H$, and $R_{xx}^{-45}$ is calculated according to the formula $R_{XX}^{-45} = HH^H$. $f(\theta)$ is obtained based on the calculated $R_{xx}^{+45}$, $R_{xx}^{-45}$ or $R_{xx}^{+45}$ and $R_{xx}^{-45}$.

In step S300, it is to generate a downlink transmitting weight value by the DOA information.

The DOA-BF weight estimation device generates the downlink transmitting weight value by the DOA information,

$$w(\theta_{real}) = \left[ 1, \quad e^{-j2\pi \frac{d}{\lambda_{DL}} \sin\theta_{real}}, \quad \cdots, \quad e^{-j(M-1)2\pi \frac{d}{\lambda_{DL}} \sin\theta_{real}} \right] \quad (3)$$

$\lambda_{DL}$ is a downlink wavelength and is determined by the frequency of the carrier and the speed of the carrier transmission. In TDD system, $\lambda_{DL} = \lambda_{UL}$; and in FDD system, $\lambda_{DL} \neq \lambda_{UL}$. $d$ is an actual array element space.

For the dual-polarized antennas, the downlink transmitting weight value is:

$$w = \left[ w(\theta_{real}) \quad e^{j\phi} w(\theta_{real}) \right] \quad (4)$$

Herein, in the formula (4), $e^{j\phi}$ represents a difference introduced by initial phases of the antennas in different polarization directions, $e^{j\Phi} = \cos\Phi + j\sin\Phi$. Assumed that $H_1$ and $H_{M+1}$ represent one polarized antenna pair, then $\phi = angle(H_{M+1}/H_1)$. Similarly, $\phi$ also may be obtained by calculating other polarized antenna pair or calculating the average value of multiple polarized antenna pairs.

The present embodiment provides a DOA-BF weight estimation method for a dual-polarized antenna system. The DOA-BF weight estimation method for a dual-polarized antenna system solves the current situation that when the DOA information in the related art is applied to DOA-BF weight value estimation, the same phase combination cannot be performed, and enhances the performance of the system efficiently.

As shown in Fig 2, the present embodiment further provides a DOA-BF weight estimation device for a dual-polarized antenna system, including an acquiring module 10, a calculating module 20 and a generating module 30.

The acquiring module 10 is arranged to acquire an uplink channel estimation value and an uplink steering vector.

The calculating module 20 is arranged to acquire DOA information according to the uplink channel estimation value and the uplink steering vector.

The generating module 30 is arranged to generate a downlink transmitting weight value by the DOA information.

The acquiring module 10 of the DOA-BF weight estimation device acquires the uplink channel estimation value according to the number of dual-polarized smart antennas. The number of dual-polarized smart antennas corresponds to the dimension value of the uplink channel estimation value. If the number of the dual-polarized smart antennas at the base station end is eight, then the uplink channel estimation matrix H is 8*1 dimensions.

The uplink steering vector is obtained by calculating. The calculation of the uplink steering vector is as shown in the formula (5):

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i=1,2,\cdots,N) \quad (5)$$

Herein, M is a number of receiving array elements of a base station. For the dual-polarized antenna system, M equals to 1/2 of the number of dual-polarized smart antennas. The steering vectors of two groups of antennas in polarization directions are consistent. $\lambda_{UL}$ is an uplink wavelength. $d$ is an actual array element space. $\theta_i$ is an incidence angle, and $\theta_i \in$ [-90°, 90°], N is the number of values within a value range of $\theta_i$; j is an imaginary unit, and e is a base of natural logarithms.

Assumed that the number of the dual-polarized smart antennas at the base station end is eight, then in the formula (5), M=4. $\lambda_{UL}$ is an uplink wavelength and is determined by the frequency of the carrier and the speed of the carrier transmission. $d$ is an actual array element space, and is designed by the factory in good condition when delivery from factory. $\theta i$ is an incidence angle, and $\theta_i \in$ [-90°, 90]. When the interval degree takes 1 degree, N=181.

The calculating module 20 of the DOA-BF weight estimation device acquires the DOA information according to the uplink channel estimation value and the uplink steering vector. The DOA information is an angle of DOA. According to the maximum signal-to-noise ratio principle, the angle of DOA is obtained by the following formula (2):

$$f(\theta) = \underset{\theta \in \theta_i}{\arg}\left( \max\left( diag\left( a(\theta_i)^H \times R_{xx} \times a(\theta_i) \right) \right) \right) \quad (6)$$

Herein, in the formula (6), $R_{xx} = HH^H$; H is an uplink channel estimation matrix, and $H^H$ is a conjugate transpose matrix for H; $a(\theta_i)^H$ is a conjugate transpose matrix for $a(\theta_i)$; and in the $f(\theta)$, the maximum $\theta$ is used as an estimated DOA angle $\theta_{real}$.

For dual-polarized antennas, the calculation for $R_{xx}$ may be calculated separately according to two groups of the polarization directions, and also may be calculated by only taking one of two groups of the polarization directions. When $R_{xx}$ is calculated according to one group of polarization direction, the uplink channel estimation matrix H of the antennas in +45 degree of polarization direction is M*1 dimensions, and the uplink channel estimation matrix H of the antennas in -45 degree of polarization direction is M*1 dimensions, therefore $R_{xx}^{+45}$ is calculated according to the formula $R_{XX}^{+45} = HH^H$, and $R_{xx}^{-45}$ is calculated according to the formula $R_{XX}^{-45} = HH^H$. $f(\theta)$ is obtained based on the calculated $R_{xx}^{+45}$, $R_{xx}^{-45}$ or $R_{xx}^{+45}$ and $R_{xx}^{-45}$.

The generating module 30 of the DOA-BF weight estimation device generates the downlink transmitting weight value by the DOA information.

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right] \quad (7)$$

In the formula (7), $\lambda_{DL}$ is a downlink wavelength and is determined by the frequency of the carrier and the speed of the carrier transmission. In TDD system, $\lambda_{DL} = \lambda_{UL}$; and in FDD system, $\lambda_{DL} \neq \lambda_{UL}$. $d$ is an actual array element space.

For the dual-polarized antennas, the downlink transmitting weight value is:

$$w = \left[ w(\theta_{real}) \quad e^{j\phi}w(\theta_{real}) \right] \quad (8)$$

Herein, in the formula (8), $e^{j\phi}$ represents a difference introduced by initial phases of the antennas in different polarization directions, $e^{j\Phi} = \cos\Phi + j\sin\Phi$. Assumed that $H_1$ and $H_{M+1}$ represent one polarized antenna pair, then $\phi = angle(H_{M+1}/H_1)$. Similarly, $\phi$ also may be obtained by calculating other polarized antenna pair or calculating the average value of multiple polarized antenna pairs.

The present embodiment provides a DOA-BF weight estimation device for a dual-polarized antenna system. The DOA-BF weight estimation device for a dual-polarized antenna system solves the current situation that when the DOA information in the related art is applied to DOA-BF weight value estimation, the same phase combination cannot be performed, and enhances the performance of the system efficiently.

The ordinary person skilled in the art can understand that all or part of steps of the above embodiments may be implemented by using a flow of computer program. The computer program can be stored in a computer readable memory medium, and the computer program is executed on corresponding hardware platforms (such as a system, a device, an apparatus and a component, etc.). When the computer program is carried out, one of the steps or a combination of the steps of the method embodiments is included.

Alternatively, all or part of the steps of the above embodiments may also be implemented by using integrated circuits, and these steps may be made into a plurality of integrated circuit modules respectively, or a plurality of modules or steps may be made into a single integrated circuit module to be implemented. Therefore, the present invention is not limited to any combination of hardware and software in a specific form.

Various apparatuses/functional modules/functional units in the above embodiments may be implemented by using a universal calculating device. They may be concentrated on a single calculating device or distributed in a network consisting of a plurality of calculating devices.

If implemented in the form of a software function module and sold or used as an independent product, various apparatuses/functional modules/functional units in the above embodiments may be stored in a computer readable memory medium. The above-mentioned computer readable memory medium may be a read-only memory, a magnetic disk or an optical disk, etc.

Industrial Applicability

The embodiments of the present invention solve the current situation that when the DOA information is applied to DOA-BF weight value estimation, the same phase combination cannot be performed, and enhance the performance of the system efficiently.

**Claims**

1. A Direction of Arrival Beamforming, DOA-BF, weight estimation method for a dual-polarized antenna system, comprising:

    acquiring an uplink channel estimation and an uplink steering vector (S100);
    acquiring a Direction of Arrival, DOA, information according to the uplink channel estimation and the uplink steering vector (S200);
    generating a downlink transmitting weight according to the DOA information (S300).
    wherein, acquiring the uplink steering vector comprises obtaining

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i = 1,2,\cdots,N)$$

    wherein, M is a number of receiving array elements of a base station; for the dual-polarized antenna system, M equals to 1/2 of a number of dual-polarized smart antennas; $\lambda_{UL}$ is an uplink wavelength; $d$ is an actual array element space; $\theta_i$ is an incidence angle, and $\theta_i \in$ [-90°,90°]; $N$ is a number of values within a value range of $\theta_i$; j is an imaginary unit; and e is a base of natural logarithms;
    wherein, the DOA information is a DOA angle, and acquiring the DOA information comprises calculating the DOA angle from

$$f(\theta) = \arg_{\theta \in \theta_i} \left( \max \left( diag \left( a(\theta_i)^H \times R_{xx} \times a(\theta_i) \right) \right) \right);$$

    wherein, $R_{xx} = HH^H$; H is an uplink channel estimation matrix according to the acquired uplink channel estimation, and $H^H$ is a conjugate transpose matrix for H; $a(\theta_i)^H$ is a conjugate transpose matrix for $a(\theta_i)$, such that in the

$f(\theta)$, the maximum $\theta$ is used as an estimated DOA angle $\theta_{real}$, $\theta_{real} \in$ [-90°,90°]; wherein generating the downlink transmitting weight comprises generating

$$w = \left[ w(\theta_{real}) \quad e^{j\phi} w(\theta_{real}) \right]$$

wherein,

$$\overline{w}(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

wherein,

$\lambda_{DL}$ is a downlink wavelength; $d$ is an actual array element space;
$e^{j\phi}$ represents a difference introduced by initial phases of the antennas in different polarization directions,
$e^{j\Phi} = \cos\Phi + j\sin\Phi$.

2. A Direction of Arrival Beamforming, DOA-BF, weight estimation device for a dual-polarized antenna system, comprising:

   an acquiring module (10), arranged to acquire an uplink channel estimation and an uplink steering vector;
   a calculating module (20), arranged to acquire Direction of Arrival, DOA, information according to the uplink channel estimation and the uplink steering vector; and
   a generating module (30), arranged to generate a downlink transmitting weight according to the DOA information;
   wherein, the acquiring module is arranged to acquire the uplink steering vector by obtaining

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i = 1, 2, \cdots, N)$$

wherein, M is a number of receiving array elements of a base station; for the dual-polarized antenna system, M equals to 1/2 of a number of dual-polarized smart antennas; $\lambda_{UL}$ is an uplink wavelength; $d$ is an actual array element space; $\theta_i$ is an incidence angle, and $\theta_i \in$ [-90°,90°]; $N$ is a number of values within a value range of $\theta_i$; j is an imaginary unit; and e is a base of natural logarithms;
wherein, the DOA information is a DOA angle, and the calculating module is arranged to acquire the DOA information by calculating the DOA angle with

$$f(\theta) = \underset{\theta \in \theta_i}{\arg} \left( \max \left( diag \left( a(\theta_i)^H \times R_{xx} \times a(\theta_i) \right) \right) \right);$$

wherein, $R_{xx} = HH^H$; H is an uplink channel estimation matrix according to the acquired uplink channel estimation, and $H^H$ is a conjugate , such that transpose matrix for H; $a(\theta_i)^H$ is a conjugate transpose matrix for $a(\theta_i)$ in the $f(\theta)$, the maximum $\theta$ is used as an estimated DOA angle $\theta_{real}$, $\theta_{real} \in$ [-90°, 90°]; wherein, the generating module is arranged to calculate the downlink transmitting weight by generating

$$w = \left[ w(\theta_{real}) \quad e^{j\phi} w(\theta_{real}) \right]$$

wherein,

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

$\lambda_{DL}$ is a downlink wavelength; $d$ is an actual array element space;

$e^{j\phi}$ represents a difference introduced by initial phases of the antennas in different polarization directions, $e^{j\Phi} = \cos\Phi + j\sin\Phi$.

3. A computer program comprising instructions which, when the program is executed by a computer, cause the computer to carry out the method according to claim 1.

4. A computer-readable data carrier having stored thereon the computer program according to claim 3.

**Patentansprüche**

1. Ankunftsrichtung-Strahlformung (Direction of Arrival Beamforming, DOA-BF), -Gewichtsschätzungsverfahren für ein Antennensystem mit dualer Polarisierung, umfassend:

Erfassen einer Uplink-Kanalschätzung und eines Uplink-Steuerungsvektors (S100);
Erfassen einer Ankunftsrichtung, DOA, -Information gemäß der Uplink-Kanalschätzung und dem Uplink-Steuerungsvektor (S200);
Erzeugen eines Downlink-Übertragungsgewichts gemäß den DOA-Informationen (S300);
wobei das Erfassen des Uplink-Steuerungsvektors das Erhalten von Folgendem umfasst:

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i = 1, 2, \cdots, N)$$

wobei M eine Anzahl von Empfangsanordnungselementen einer Basisstation; für das Antennensystem mit dualer Polarisierung M gleich 1/2 einer Anzahl von intelligenten Antennen mit dualer Polarisierung ist, $\lambda_{UL}$ eine Uplink-Wellenlänge ist, $d$ ein tatsächlicher Anordnungselementraum ist, $\theta_i$ ein Einfallswinkel ist und $\theta_i \in [90°, 90°]$; $N$ eine Anzahl von Werten innerhalb eines Wertebereichs von $\theta_i$ ist; j eine imaginäre Einheit ist und e eine Basis natürlicher Logarithmen ist;
wobei die DOA-Informationen ein DOA-Winkel sind und das Erfassen der DOA-Informationen das Berechnen des DOA-Winkels von Folgendem umfasst:

$$f(\theta) = \underset{\theta \in \theta_i}{\arg}\left( \max\left( diag\left( a(\theta_i)^H \times R_{xx} \times a(\theta_i) \right) \right) \right);$$

wobei $R_{xx} = HH^H$; H eine Uplink-Kanalschätzungsmatrix gemäß der erfassten Uplink-Kanalschätzung ist und $H^H$ eine konjugierte transponierte Matrix für H ist; $a(\theta_i)^H$ eine konjugierte transponierte Matrix für $a(\theta_i)$ ist, derart dass in der $f(\theta)$ das Maximum $\theta$ als ein geschätzter DOA-Winkel $\theta_{real}$ verwendet wird, $\theta_{real} \in [-90°, 90°]$;
wobei das Erzeugen des Downlink-Übertragungsgewichts das Erzeugen von Folgendem umfasst:

$$w = \left[ w(\theta_{real}) \quad e^{j\phi}w(\theta_{real}) \right]$$

wobei

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

wobei $\lambda_{DL}$ eine Downlink-Wellenlänge ist, $d$ ein tatsächlicher Anordnungselementraum ist,
$e^{j\phi}$ eine Differenz darstellt, die durch Anfangsphasen der Antennen in unterschiedlichen Polarisierungs-
richtungen eingeführt wird, ej$\Phi$ =cos$\Phi$ + jsin$\Phi$

2. Ankunftsrichtung-Strahlformung (Direction of Arrival Beamforming, DOA-BF), -Gewichtsschätzungsvorrichtung für ein Antennensystem mit dualer Polarisierung, umfassend:

ein Erfassungsmodul (10), das angeordnet ist, um eine Uplink-Kanalschätzung und einen Uplink-Steuerungsvektor zu erfassen;
ein Berechnungsmodul (20), das angeordnet ist, um Ankunftsrichtung, DOA, -Informationen gemäß der Uplink-Kanalschätzung und dem Uplink-Steuerungsvektor zu erfassen; und
ein Erzeugungsmodul (30), das angeordnet ist, um ein Downlink-Übertragungsgewicht gemäß den DOA-Informationen zu erzeugen;
wobei das Erfassungsmodul angeordnet ist, um den Uplink-Steuerungsvektor durch Erhalten von Folgendem zu erfassen:

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i = 1, 2, \cdots, N)$$

wobei M eine Anzahl von Empfangsanordnungselementen einer Basisstation ist; für das Antennensystem mit dualer Polarisierung M gleich 1/2 einer Anzahl von intelligenten Antennen mit dualer Polarisierung ist; $\lambda_{UL}$ eine Uplink-Wellenlänge ist, $d$ ein tatsächlicher Anordnungselementraum ist; $\theta_i$ ein Einfallswinkel ist und $\theta_i \in$ [-90°,90°]; $N$ eine Anzahl von Werten innerhalb eines Wertebereichs von $\theta_i$ ist; j eine imaginäre Einheit ist und e eine Basis natürlicher Logarithmen ist;
wobei die DOA-Informationen ein DOA-Winkel sind und das Berechnungsmodul angeordnet ist, um die DOA-Informationen durch Berechnen des DOA-Winkels mit Folgendem zu erfassen:

$$f(\theta) = \arg_{\theta \in \theta_i} \left( \max \left( diag \left( a(\theta_i)^H \times R_{xx} \times a(\theta_i) \right) \right) \right);$$

wobei $R_{xx} = HH^H$; H eine Uplink-Kanalschätzungsmatrix gemäß der erfassten Uplink-Kanalschätzung ist und $H^H$ eine konjugierte transponierte Matrix für H ist; $a(\theta_i)^H$ eine konjugierte transponierte Matrix für $a(\theta_i)$ ist, derart dass in der $f(\theta)$ das Maximum $\theta$ als ein geschätzter DOA-Winkel $\theta_{real}$ verwendet wird, $\theta_{real} \in$ [-90°,90°];
wobei das Erzeugungsmodul angeordnet ist, um das Downlink-Übertragungsgewicht durch Erzeugen von Folgendem zu berechnen:

$$w = \left[ w(\theta_{real}) \quad e^{j\phi} w(\theta_{real}) \right]$$

wobei

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

$\lambda_{DL}$ eine Downlink-Wellenlänge ist, $d$ ein tatsächlicher Anordnungselementraum ist,
$e^{j\phi}$ eine Differenz darstellt, die durch Anfangsphasen der Antennen in unterschiedlichen Polarisierungs-
richtungen eingeführt wird, $e^{j\Phi} = \cos\Phi + j\sin\Phi$.

3. Computerprogramm, das Befehle umfasst, die, wenn das Programm durch einen Computer ausgeführt wird, bewirken, dass der Computer das Verfahren nach Anspruch 1 durchführt.

4. Maschinenlesbarer Datenträger, der darauf gespeichert das Computerprogramm nach Anspruch 3 aufweist.

**Revendications**

1. Procédé d'estimation de poids dans la Formation de faisceau sur la base de la Direction d'arrivée, DOA-BF, pour
un système d'antenne à double polarisation, comprenant :

l'acquisition d'une estimation de canal de liaison montante et d'un vecteur d'orientation de liaison montante
(S100) ;
l'acquisition d'une information de Direction d'arrivée, DOA, en fonction de l'estimation de canal de liaison montante et du vecteur d'orientation de liaison montante (S200) ;
la génération d'un poids de transmission en liaison descendante, conformément à l'information de DOA (S300),
où l'acquisition du vecteur d'orientation de liaison montante comprend l'obtention de

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i = 1, 2, \cdots, N)$$

où, M est un nombre d'éléments récepteurs de réseau d'une station de base pour le système d'antenne à
double polarisation, M est égal à 1/2 d'un nombre d'antennes intelligentes à double polarisation ; $\lambda_{UL}$ est une
longueur d'onde en liaison montante ; $d$ est un espace d'élément de réseau réel ; $\theta_i$ est un angle d'incidence,
et $\theta_i \in [-90°, 90°]$ ; N est un nombre de valeurs dans une plage de valeurs de $\theta_i$ ; j est une unité imaginaire ; et
e est une base de logarithmes naturels ;
où l'information de DOA est un angle de DOA, et l'acquisition de l'information de DOA comprend le calcul de
l'angle de DOA à partir de

$$f(\theta) = \underset{\theta \in \theta_i}{\arg}\left(\max\left(diag\left(a(\theta_i)^H \times R_{xx} \times a(\theta_i)\right)\right)\right);$$

où $R_{xx} = HH^H$ ; H est une matrice d'estimation de canal de liaison montante selon l'estimation de canal de
liaison montante acquise et $H^H$ est une matrice transposée conjuguée pour H, $a(\theta_i)^H$ est une matrice transposée
conjuguée pour $a(\theta_i)$, tel que dans $f(\theta)$, le maximum $\theta$ est utilisé comme angle de DOA estimé $\theta_{real}$, $\theta_{real} \in [-90°,$
90°] ;
où la génération du poids de transmission en liaison descendante comprend la génération de

$$w = \left[ w(\theta_{real}) \quad e^{j\phi} w(\theta_{real}) \right]$$

où

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

où $\lambda_{DL}$ est une longueur d'onde en liaison descendante, $d$ est un espace d'élément de réseau réel, $e^{j\phi}$ représente une différence introduite par les phases initiales des antennes dans différentes directions de polarisation, $e^{j\Phi} = \cos\Phi + j\sin\Phi$

2. Dispositif d'estimation de poids dans la Formation de faisceau sur la base de la Direction d'arrivée, DOA-BF, pour un système d'antenne à double polarisation, comprenant :

un module d'acquisition (10) conçu pour acquérir une estimation de canal de liaison montante et un vecteur d'orientation de liaison montante ;
un module de calcul (20) conçu pour acquérir une information de Direction d'arrivée, DOA, en fonction de l'estimation de canal de liaison montante et du vecteur d'orientation de liaison montante ; et
un module de génération (30) conçu pour générer un poids de transmission en liaison descendante, conformément à l'information de DOA ;
où le module d'acquisition est conçu pour acquérir le vecteur d'orientation de liaison montante en obtenant

$$a(\theta_i) = \left[ 1, \quad e^{j2\pi\frac{d}{\lambda_{UL}}\sin\theta_i}, \quad \cdots, \quad e^{j(M-1)2\pi\frac{d}{\lambda_{UL}}\sin\theta_i} \right]^T \quad (i = 1, 2, \cdots, N)$$

où, M est un nombre d'éléments récepteurs de réseau d'une station de base pour le système d'antenne à double polarisation, M est égal à 1/2 d'un nombre d'antennes intelligentes à double polarisation, $\lambda_{UL}$ est une longueur d'onde en liaison montante ; $d$ est un espace d'élément de réseau réel ; $\theta_i$ est un angle d'incidence, et $\theta_i \in \llcorner-90°, 90°\lrcorner$ ; N est un nombre de valeurs dans une plage de valeurs de $\theta_i$ ; j est une unité imaginaire et e est une base de logarithmes naturels ;
où l'information de DOA est un angle de DOA, et le module de calcul est conçu pour acquérir l'information de DOA en calculant l'angle de DOA avec

$$f(\theta) = \underset{\theta \in \theta_i}{\arg}\left( \max\left( diag\left( a(\theta_i)^H \times R_{xx} \times a(\theta_i) \right) \right) \right);$$

où $R_{xx} = HH^H$ ; H est une matrice d'estimation de canal de liaison montante selon l'estimation de canal de liaison montante acquise et $H^H$ est une matrice transposée conjuguée pour H, $a(\theta_i)^H$ est une matrice transposée conjuguée pour $a(\theta_i)$, tel que dans $f(\theta)$, le maximum $\theta$ est utilisé comme angle de DOA estimé $\theta_{real}$, $\theta_{real} \in [-90°, 90°]$ ;
où le module de génération est conçu pour calculer le poids de transmission en liaison descendante, en générant l'équation

$$w = \left[ w(\theta_{real}) \quad e^{j\phi}w(\theta_{real}) \right]$$

$$w(\theta_{real}) = \left[ 1, \quad e^{-j2\pi\frac{d}{\lambda_{DL}}\sin\theta_{real}}, \quad \cdots, \quad e^{-j(M-1)2\pi\frac{d}{\lambda_{DL}}\sin\theta_{real}} \right];$$

où

$\lambda_{DL}$ est une longueur d'onde en liaison descendante ; $d$ est un espace d'élément de réseau réel ;
$e^{j\phi}$ représente une différence introduite par les phases initiales des antennes dans différentes directions de polarisation, $e^{j\Phi} = \cos\Phi + j\sin\Phi$.

3. Programme informatique comprenant des instructions qui, lorsque le programme est exécuté par un ordinateur, amènent l'ordinateur à exécuter le procédé selon la revendication 1.

4. Support de données lisible par ordinateur sur lequel est mémorisé le programme informatique selon la revendication 3.

S100

Acquire an uplink channel estimation value and an uplink steering vector

S200

Acquire DOA information according to the uplink channel estimation value and the uplink steering vector

S300

Generate a downlink transmitting weight value by the DOA information

FIG. 1

Acquiring module — 10

Calculating module — 20

Generating module — 30

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2351246 A1